Europäisches Patentamt

European Patent Office

Office européen des brevets

(19)

(11) Numéro de publication: **0 213 017 B1**

(12) **FASCICULE DE BREVET EUROPEEN**

(45) Date de publication de fascicule du brevet:
**10.07.91**

(51) Int. Cl.5: **H04N 1/46**

(21) Numéro de dépôt: **86401625.8**

(22) Date de dépôt: **21.07.86**

(54) **Dispositif pour la restitution et/ou l'analyse d'images en couleurs utilisant un tube cathodique ligne à écran sur fibres optiques.**

(30) Priorité: **23.07.85 FR 8511258**

(43) Date de publication de la demande:
**04.03.87 Bulletin 87/10**

(45) Mention de la délivrance du brevet:
**10.07.91 Bulletin 91/28**

(84) Etats contractants désignés:
**DE FR GB IT SE**

(56) Documents cités:
**DE-A- 2 016 303**
**FR-A- 2 354 009**
**US-A- 3 209 191**

**PATENTS ABSTRACTS OF JAPAN, vol. 6, no. 259 (E-149)[1137], 17 décembre 1982; & JP-A-57 154 970 (YOKOGAWA DENKI SEISAKUS-HO K.K.) 24-09-1982**

**JAPAN ELECTRONIC ENGINEERING, vol. 28, mars 1969, pages 27-30, Tokyo, JP; E. MIYA-ZAKI: "Facsimile printing tubes and their applications"**

**PATENTS ABSTRACTS OF JAPAN, vol. 7, no.**

**80 (E-168)[1225], 2 avril 1983; & JP-A-58 6663 (NIPPON DENSHIN DENWA KOSHA) 14-01-1983**

(73) Titulaire: **SOCIETE EUROPEENNE DE PROPULSION (S.E.P.) Société Anonyme dite:**
**24 Rue Salomon de Rothschild**
**F-92150 Suresnes(FR)**

(72) Inventeur: **Rosier, Jean-Claude**
**8 Chemin du Roy**
**Giverny F-27620 Gasny(FR)**

(74) Mandataire: **Joly, Jean-Jacques et al**
**CABINET BEAU DE LOMENIE 55, rue d'Amsterdam**
**F-75008 Paris(FR)**

## Description

La présente invention est relative à un dispositif pour la restitution et/ou l'analyse d'images en couleurs.

Un domaine particulier, mais non exclusif d'application de l'invention est celui de la restitution ou de l'analyse d'images à très haute résolution, telles que celles reçues de satellites d'observation.

Dans ce domaine particulier, on connaît déjà des appareils utilisant soit un tambour tournant sur lequel un film est impressionné ligne par ligne au moyen d'une source de lumière modulée déplacée pas à pas le long du tambour, soit un berceau sur lequel un film est plaqué et est impressionné ou analysé au moyen d'une source de lumière éclairant un miroir tournant avec un balayage ligne par ligne par déplacement relatif entre le berceau et le miroir. On pourra se référer en particulier aux brevets français FR-A-2 293 841 et FR-A-2 571 198 déposés par la demanderesse.

Ces appareils connus donnent toute satisfaction sur le plan de la qualité des résultats obtenus, mais sont relativement onéreux en raison notamment des exigences que doivent satisfaire les moyens mécaniques utilisés pour le balayage ligne afin d'obtenir la précision voulue.

Il est donc souhaitable de pouvoir disposer de moyens de balayage qui, tout en permettant toujours une haute résolution, soient d'un coût moins élevé.

Pour la reproduction d'images en couleurs sur un support photosensible, il a déjà été proposé d'utiliser un tube cathodique ligne à écran sur fibres optiques pour effectuer le balayage ligne du support photosensible. Un tube cathodique ligne à écran sur fibres optiques présente, par rapport aux tubes cathodiques classiques deux particularités essentielles : le balayage est effectué exclusivement ou principalement dans une seule direction, et l'écran du tube est muni extérieurement d'un ensemble de fibres optiques accolées qui acheminent à une certaine distance de l'écran les photons produits par le faisceau électronique.

Le brevet des US-A- 4 309 720 a pour objet un dispositif de reproduction d'images en couleurs utilisant un tube cathodique ligne à écran sur fibres optiques, l'écran étant muni de bandes phosphorescentes fournissant des couleurs différentes. Une ligne de l'image à reproduire est formée en superposant ses composantes de couleur, chaque composante de couleur étant produite par balayage de la bande phosphorescente correspondante au moyen du faisceau électronique du tube.

L'utilisation de bandes phosphorescentes soulève toutefois plusieurs difficultés.

D'abord, pour équilibrer les différentes couleurs, il est nécessaire de disposer de phosphores qui produisent de mêmes intensités lumineuses en réponse à une même excitation, ou, si les phosphores ont des rendements quantiques différents, de moduler l'intensité du faisceau électronique en fonction de la couleur.

Ensuite, le dépôt de bandes de phosphore est d'un coût relativement élevé, d'autant plus si l'on cherche à réaliser des bandes très étroites.

Mais même avec des techniques très élaborées, il est en pratique très difficile de réaliser de façon satisfaisante des bandes de largeur inférieure à 200 microns.

Si l'on recherche une résolution inférieure par exemple d'environ 30 microns (dimension du spot), il est alors nécessaire de stocker un assez grand nombre de données représentant les composantes de couleurs de lignes successives pour pouvoir restituer ces données dans l'ordre qui convient afin de produire les composantes de couleur des lignes d'image successives sur le support d'image qui défile devant l'écran.

Il a par ailleurs été proposé, dans le document DE-A-2 016 303, de réaliser un tube de prise de vue pour caméra de télévision muni, sur sa face frontale, d'un filtre formé de bandes de couleurs, alternativement rouge, bleue et verte. L'image à analyser est focalisée, à travers le filtre et un ensemble de fibres optiques, sur une photocathode située du côté intérieur de la face frontale du tube. L'image électronique produite par la photocathode est à son tour focalisée sur une cible balayée par un faisceau électronique. Le filtre en bandes peut être produit par exposition photographique d'un film couleur en présence d'un modèle à bandes.

En outre, le document EP-A-0 198 794, publié après la date de priorité du présent brevet, mais bénéficiant d'une date de priorité antérieure, montre un dispositif de reproduction d'images sur un support d'image, dispositif du type comprenant : un tube cathodique à écran ligne, un ensemble de fibres optiques fixé sur la face avant de l'écran du tube, un masque de couleur situé devant l'ensemble de fibres optiques et comportant au moins trois lignes de couleurs différentes, des moyens de balayage de l'écran par le faisceau électronique suivant différentes lignes correspondant aux lignes du masque de couleurs et des moyens de déplacement relatif entre le tube et un support d'image situé à l'avant du masque, de manière à parcourir chaque ligne de l'image sur le support par chacun des faisceaux produits par les balayages de l'écran suivant les différentes lignes du masque de couleurs.

La présente invention a pour but de fournir un dispositif permettant de réaliser de façon relativement peu coûteuse la restitution et/ou l'analyse d'images en couleurs avec une résolution élevée.

Ce but est atteint au moyen d'un dispositif du type de celui du document EP-A-0 198 174, tel que défini ci-dessus, et dans lequel, conformément à l'invention, le masque de couleurs est constitué par un film couleur fixé devant l'ensemble de fibres optiques et sur lequel ont été formées les lignes de couleurs différentes.

L'utilisation d'un masque de couleurs en forme de film placé devant l'écran à fibres optiques présente d'incontestables avantages par rapport aux bandes de matériaux phosphorescents.

D'abord, au lieu de nécessiter des phosphores ayant des pics d'émission relativement étroits, on peut utiliser un écran à spectre large.

Ensuite, les lignes de couleurs réalisées sur le masque peuvent être très étroites sans que cela entraîne un coût de production élevé. Il est par exemple possible de former des lignes de quelques dizaines de microns de largeur sur un film photographique couleur.

On notera encore que le choix des couleurs est pratiquement illimité et que le réglage de l'intensité du faisceau lumineux dans chaque couleur peut être réalisé facilement au moment de la fabrication du masque.

En mode restitution, le faisceau électronique du tube est modulé en fonction d'un signal d'image qui correspond à l'image à restituer et qui est sous forme de données représentant chacune une composante de couleur d'une ligne d'image. Le support d'image est déplacé par rapport au masque de manière à former sur ce support chaque ligne de l'image à restituer par superposition de ses composantes de couleurs formées chacune lors du passage du support d'image devant la ligne correspondante du masque de couleurs balayée par le faisceau électronique. Des registres tampons reçoivent lesdites données représentant les composantes de couleurs des lignes d'image et sont agencés de manière à permettre la lecture séquentielle desdites données dans l'ordre dans lequel les composantes de couleurs des lignes de l'image sont formées sur le support d'image.

En mode analyse, l'image à analyser est balayée ligne par ligne dans chacune des couleurs et la quantité de lumière ayant traversé le support d'image (analyse en transmission d'une image sur un support transparent) ou réfléchie par le support d'image ( analyse en réflexion d'une image sur un support opaque) est envoyée sur un détecteur unique au moyen d'une optique de reprise ou de fibres optiques, pour être mesurée et numérisée.

L'invention sera mieux comprise à la lecture de la description faite, ci-après, à titre indicatif mais non limitatif, en référence aux dessins sur lesquels :

- la figure 1 est une vue schématique en élévation latérale d'un dispositif de restitution conforme à l'invention,
- la figure 2 est une vue de dessus illustrant de façon plus détaillée le tube cathodique du dispositif de la figure 1,
- la figure 3 est une vue en bout du tube cathodique de la figure 2, montrant le masque de couleurs,
- la figure 4 illustre de façon très schématique l'organisation de registres tampons d'où sont successivement extraites les données représentant les composantes de couleurs des lignes d'une image à restituer,
- la figure 5 est une vue partielle en coupe illustrant une première variante de réalisation du masque de couleurs dans un dispositif tel que celui de la figure 1,
- la figure 6 est une vue partielle en plan du masque selon la variante de réalisation illustrée par la figure 5,
- la figure 7 est une vue en coupe illustrant une autre variante de réalisation de la partie avant du tube cathodique dans un dispositif tel que celui de la figure 1,
- la figure 8 illustre encore une autre variante de réalisation évitant un contact direct entre le masque de couleurs et le support photosensible sur lequel est formée l'image à restituer,
- la figure 9 est une vue schématique en élévation latérale d'un dispositif d'analyse en transmission conforme à l'invention, et
- la figure 10 est une vue schématique en élévation latérale d'un mode de réalisation d'un dispositif d'analyse en réflexion conforme à l'invention.

Sur tous les dessins, les mêmes références sont utilisées pour désigner des parties identiques ou similaires.

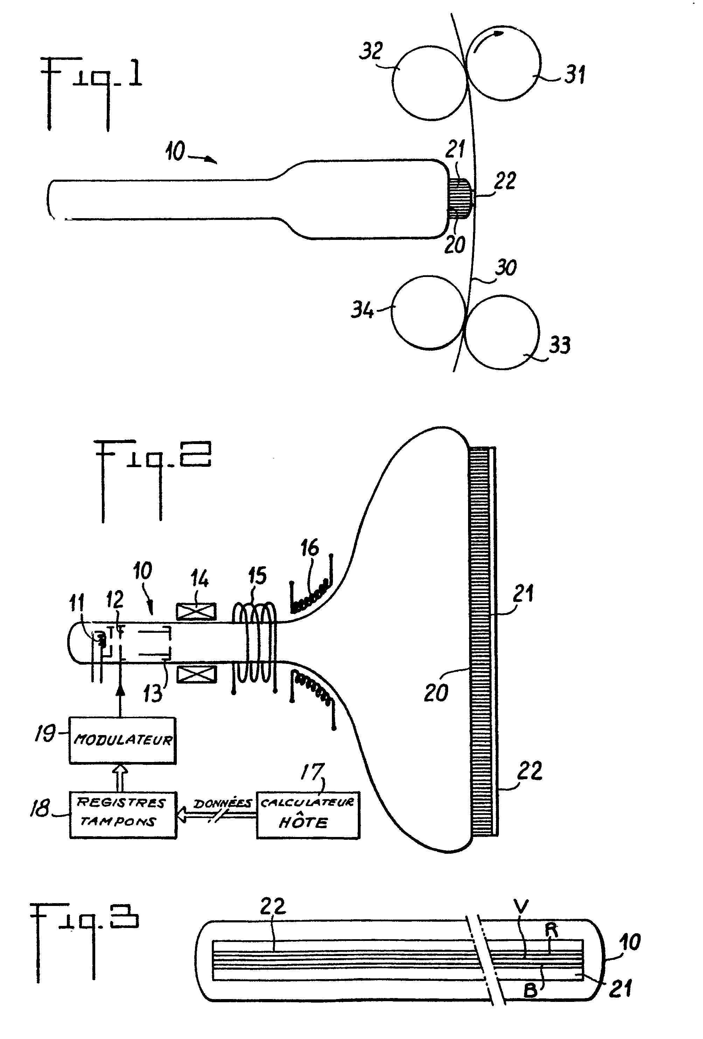

L'appareil de restitution illustré par les figures 1 à 3 comprend essentiellement un tube cathodique de type ligne avec écran sur fibres optiques et masque de couleurs, et un dispositif d'entraînement d'un film devant le tube cathodique.

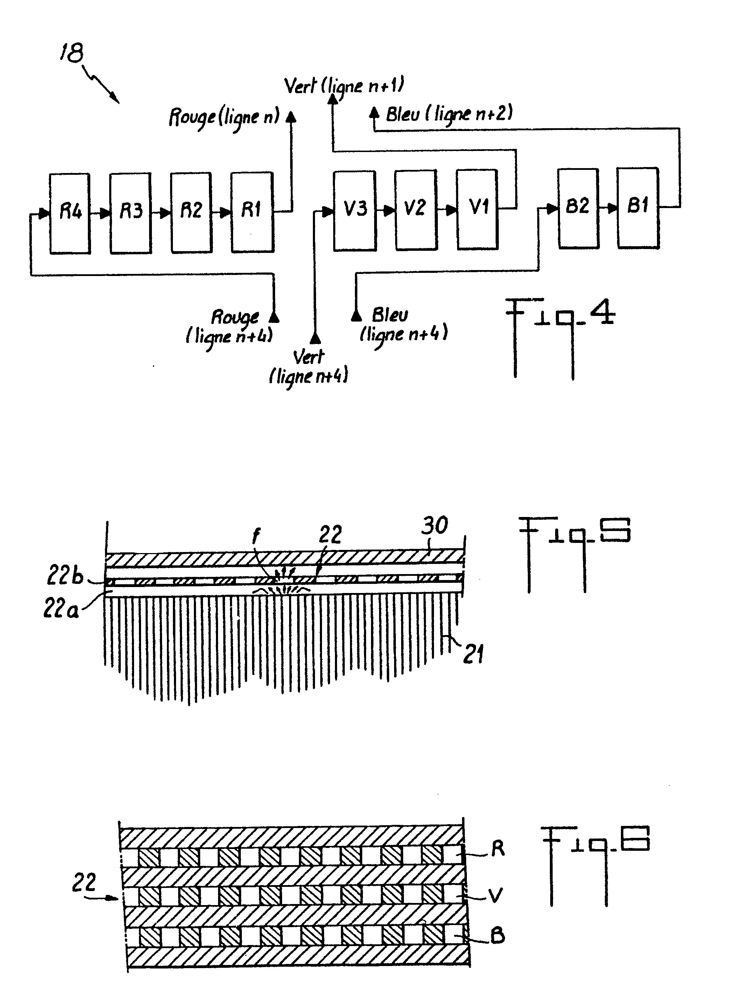

Comme on peut le voir plus particulièrement sur les figures 1 et 2, le tube cathodique 10 est de forme aplatie avec un écran 20 essentiellement unidimensionnel, par exemple une longueur utile d'environ 250 mm pour une largeur utile de 10 mm. A partir de son extrémité arrière, le tube 10 comporte une cathode émettrice constituée par un filament 11, une électrode 12 (Wehnelt) sur laquelle est appliqué un signal d'image pour moduler le faisceau électronique émis par la cathode, une anode accélératrice 13, des bobines 14 de centrage du faisceau, une unité 15 de focalisation dynamique permettant de conserver sur l'écran un spot focalisé tout le long d'une ligne de balayage, des bobinages 16 de déflexion électromagnétique assurant notamment le balayage horizontal (balayage ligne), et l'écran 20. Les éléments énumérés ci-avant sont des parties constitutives classiques d'un tube cathodique. On notera toutefois que l'utilisation d'une optique à focalisation électromagnétique associée à un écran au phosphore à haute résolution permet la formation d'un spot de 30 microns de diamètre, c'est-à-dire la possibilité de partager chaque ligne en environ 8.000 points. Les bobinages de déflexion 16 permettent en outre une déviation verticale du faisceau sur la hauteur utile de l'écran, ce qui donne la possibilité d'effectuer un balayage suivant plusieurs lignes horizontales différentes. L'amplitude de déviation verticale reste toutefois suffisamment petite pour éviter les distorsions en coussinnet et en tonneau propres aux systèmes classiques à tubes cathodiques.

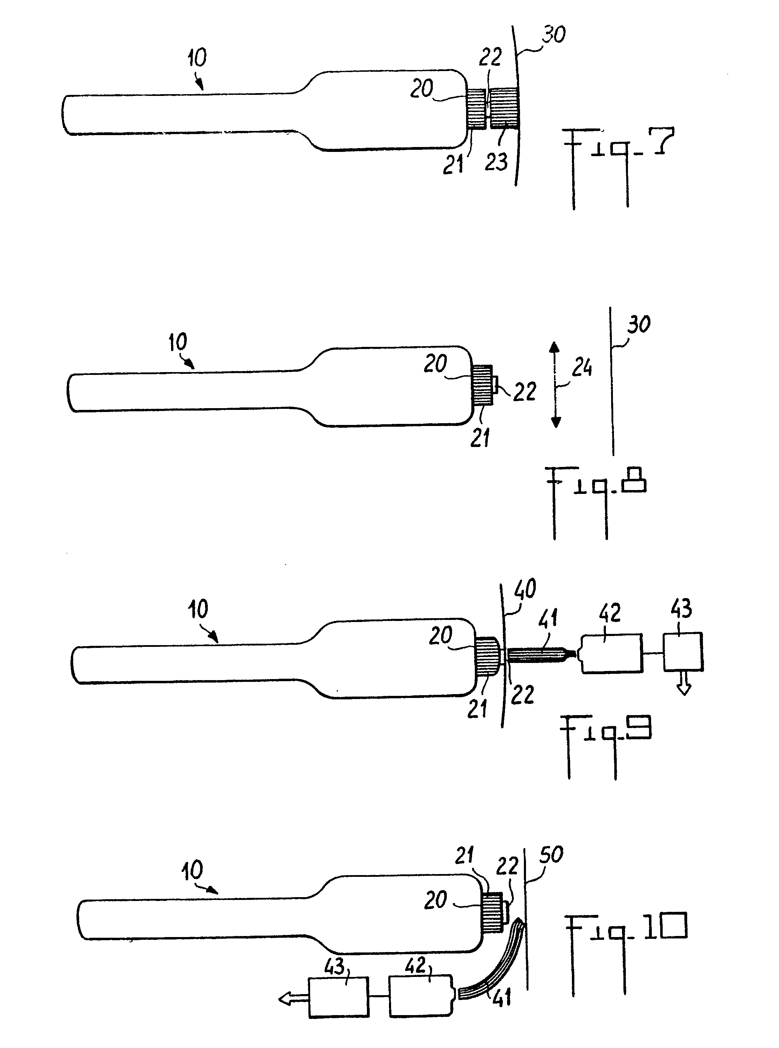

Une fenêtre en fibres optiques 21 est fixée sur la face avant de l'écran 20. Cette fenêtre 21 est constituée par un grand nombre de fibres optiques accolées sensiblement perpendiculaires à l'écran 20. Ces fibres acheminent jusqu' à la face avant de la fenêtre 21 les photons émis en réponse à l'impact du faisceau électronique sur l'écran 20. Selon une caractéristique de l'invention, un masque de couleurs 22 est fixé devant la fenêtre 21 de fibres optiques. Comme on peut le voir sur la figure 3, le masque 22 comprend trois lignes de couleurs R, V et B, respectivement rouge, verte et bleue. Chaque ligne a une largeur sensiblement égale au diamètre du spot sur l'écran 20 (par exemple 30 microns) et les lignes sont espacées l'une de l'autre d'une distance sensiblement égale à leur largeur. Le masque 22 est par exemple réalisé en traçant les lignes R, V, B sur un film couleur transparent (type film pour diapositive). Pour obtenir des lignes rigoureusement droites et parallèles entre elles avec la largeur voulue, on utilise avantageusement un appareil de restitution couleur à haute résolution de l'art antérieur du type de ceux décrits dans les brevets français précités No FR-A-2 293 841 et FR-A-2571 198 ou de ceux produits par la demanderesse sous la dénomination "Vizircolor". L'écran 20 est choisi avec un spectre d'émission large comprenant les trois couleurs R, V, B, ou au moins avec un spectre présentant des pics d'émission dans chacune de ces couleurs.

Le support d'image sur lequel doit être reportée l'image à restituer est par exemple constitué par un film 30 qui est plaqué sur le masque 22 et est entraîné dans une direction perpendiculaire à l'axe de balayage horizontal du tube 10, afin de réaliser le balayage vertical (balayage trame). L'entraînement du film 30 est assuré au moyen d'une paire de rouleaux 31, 32 qui exercent une traction sur le film 30 après le passage de celui-ci devant le masque 22. Le rouleau moteur 31 est appliqué contre la face arrière (base) du film 30 tandis que le rouleau suiveur 32 qui est libre en rotation est appliqué sur l'autre face du film 30 (côté émulsion) ; de la sorte, l'effort de traction est exercé sur le côté le moins fragile. Avant de parvenir devant le tube 10, le film 30 passe entre deux rouleaux 33, 34 sur lesquels est appliqué un couple faiblement résistant à l'avance du film afin d'assurer le parfait plaquage de celui-ci contre le masque 22. La face externe de la fenêtre 21 de fibres optiques, et le masque 22 ont un profil courbé en section verticale afin de faciliter le plaquage du film.

D'autres supports d'image peuvent être utilisés, par exemple des plans films. L'entraînement pour le balayage trame est par exemple assuré en fixant le plan film sur un chariot qui est déplacé devant le tube 10 tout en plaquant le film contre le masque de couleurs.

En balayant l'écran du tube suivant des lignes correspondant aux trois lignes de couleurs du masque 22 (le passage d'une ligne à l'autre étant réalisé par action sur les moyens de déflexion verticale), on obtient trois sources de lumière rouge, verte, bleue.

La restitution d'une image est effectuée à partir d'informations numériques fournies à l'appareil de restitution à partir d'un calculateur hôte 17 et comprenant des blocs de données représentant les composantes de couleur des différentes lignes de l'image. Les données reçues sont stockées temporairement dans des registres tampons 18 avant d'être appliquées à un modulateur 19 qui fournit le signal d'image commandant l'électrode 12. Le film 30 étant immobile, on impressionne la composante rouge de la ligne 1, la composante verte de la ligne 2 et la composante bleue de la ligne 3. Ensuite, le film 30 est déplacé d'une distance correspondant au pas entre les lignes du masque 22 et on procède à une nouvelle séquence au cours de laquelle on sur-impressionne à la composante verte de la ligne 2 sa composante rouge, on surimpressionne à la composante bleue de la ligne 3 sa composante verte et on impressionne la composante bleue de la ligne 4. Le film est à nouveau déplacé et la même séquence de balayage est répétée, ce qui permet de compléter la ligne 3 puisque ses trois composantes bleue, verte et rouge sont alors impressionnées.

Généralement, l'information représentative d'une image en couleurs est disponible suivant un format utilisant un multiplexage par ligne des données pour chaque couleur. Ainsi, on trouve par exemple des blocs successifs qui correspondent respectivement à : composante rouge de la ligne 1, composante bleue de la ligne 1, composante verte de la ligne 1, composante rouge de la ligne 2, et ainsi de suite. Aussi, avant d'être appliquées à l'appareil de restitution, les informations qui sont disponibles sous forme d'un multiplexage par lignes des données pour chaque composante doivent être réorganisées au moyen des registres tampons 18 comme illustré par la figure 4. Les données correspondant aux composantes rouges de quatre lignes successives de rangs n+3, n+2, n+1, n sont enregistrées dans des registres R4, R3, R2 et R1, les données correspondant aux composantes vertes des lignes de rangs n+3, n+2 et n+1 sont enregistrées dans des registres V3, V2 et V1 et les données correspondant aux composantes bleues des lignes de rangs n+3 et n+2 sont enregistrées dans des registres B2 et B1. La lecture séquentielle des registres R1, V1, B1 permet l'impression des composantes rouge n, verte (n+1) et bleue (n+2), le film 30 étant à l'arrêt. Ensuite, les contenus des registres R4, R3, R2, V3, V2 et B2 sont transférés respectivement dans les registres R3, R2, R1, V2, V1 et B1, les données correspondant aux composantes rouge, verte et bleue de la ligne de rang n+4 sont chargées dans les registres R4, V3 et B2 et, le film ayant été déplacé de la distance correspondnt au pas entre lignes, les registres R1, V1, B1 sont à nouveau lus séquentiellement pour l'impression des composantes rouge (n+1), verte (n+2) et bleue (n+3). On procède ainsi jusqu' à la fin de la restitution de l'image.

Le balayage ligne étant rigoureusement perpendiculaire à la direction du balayage trame, il est nécessaire de maintenir le film 30 immobile au cours de l'impression de chaque ligne. En effet, sinon, l'avance continue du film provoquerait une inclinaison systématique des lignes impressionnées.

Mais le balayage bidirectionnel du tube 10 autorise un certain nombre de corrections géométriques en temps réel au cours de la restitution de l'image.

Ainsi, il est possible d'incliner les lignes de balayage sur l'écran en agissant sur les moyens de déflexion, ce qui permet, en appliquant une tension en forme de rampe sur l'amplificateur de déflexion verticale de compenser l'inclinaison provoquée par un balayage trame réalisé de façon continue. De la sorte, le film 30 peut être entraîné en continu. Il est alors bien entendu nécessaire d'orienter les lignes du masque de couleurs parallèlement aux lignes de balayage inclinées sur l'écran 20.

La possibilité d'inclinaison de la direction de balayage ligne permet par ailleurs, le cas échéant, de parfaire l'alignement du masque avec cette direction de balayage.

Il est encore possible, au cours du balayage ligne, de modifier la vitesse du faisceau électronique en agissant sur les moyens de déflexion horizontale. L'accélération ou la décélération du faisceau en toute portion de ligne permet l'interpolation de points, c'est-à-dire une variation le long de la ligne du pas des points de l'image restituée par rapport aux points de l'image enregistrée. La possibilité de corrections géométriques sur l'image en temps réel et en cours de restitution constitue un avantage par rapport aux appareils de restitution à balayage essentiellement mécaniques lesquels, de par leur inertie, sont astreints à effectuer des balayages à vitesse constante.

Avec le dispositif des figures 1 et 2, il est nécessaire d'utiliser un masque 22 aussi mince que possible afin de limiter la largeur de l'intervalle entre la fenêtre de fibres optiques 21 et le film 30, ceci pour éviter une dispersion de la lumière issue des fibres optiques.

Le masque 22 étant réalisé par impression d'un film couleur, il est possible de "peler" l'émulsion du film pour la déposer directement sur la fenêtre 21 de fibres optiques. La surépaisseur apportée par l'émulsion est alors limitée à quelques microns, contre environ 200 microns pour le film complet.

Toutefois, le défilement du film à impressionner en contact avec le masque risque d'entraîner à plus ou moins brève échéance une abrasion puis un arrachement du masque.

Il est alors possible de protéger le masque 22 en munissant sa face extérieure d'une couche mince de matériau protecteur, par exemple une résine avec durcisseur, ou une couche métallique semi-transparente déposée par évaporation.

Une autre solution pour éviter l'abrasion consiste à ne pas déplacer le film 30 en le maintenant au contact du masque 22 tout en évitant les inconvénients liés à la dispersion de la lumière issue des fibres optiques.

Ainsi, dans la variante de réalisation illustrée (à échelle agrandie) sur les figures 5 et 6 , le masque 22 est constitué par un film avec sa base 22a collée sur les fibres de la fenêtre 21 et l'émulsion 22b (non "pelée") située du côté extérieur. Les lignes de couleurs sont constituées par une succession de segments élémentaires séparés les uns des autres par des segments opaques, les lignes étant elles-mêmes séparées les unes des autres par des lignes opaques. Les segments des lignes du masque correspondent aux points des lignes de l'image à restituer. Le masque 22 forme ainsi, comme le montre la figure 6, un damier dont les cases colorées sont espacées les unes des autres par des bords noirs d'épaisseur sensiblement constante.

Le film à impressionner 30 est légèrement espacé du masque 22. Comme le montre la figure 5, la lumière issue des fibres au cours du balayage d'une ligne de l'écran n'attteint que les segments de la ligne correspondante du masque. En effet, les photons qui se dispersent en sortie des fibres sont soit absorbés par les zones noires bordant ces segments, soit piégés par réflexions successives au sein de la base 22a lorsque leur angle d'émergence en sortie des fibres est fortement incliné par rapport à la normale au masque. De plus, les zones noires délimitant les segments des lignes du masque permettent une séparation correcte des informations lumineuses correspondant aux différents points d'une ligne de l'image même lorsque le film 30 est légèrement espacé du masque.

D'autres solutions sont possibles pour éviter une abrasion du masque.

Ainsi, un masque mince 22, tel que celui utilisé pour l'appareil des figures 1 et 2, peut être placé entre les faces planes en regard de la fenêtre 21 de fibres optiques et d'un bloc supplémentaire 23 de fibres optiques sur la face externe duquel le film à impressionner est plaqué (figure 7). Pour faciliter le plaquage du film, la face externe des fibres optiques 23 est bombée. Afin de parfaire le couplage optique entre les blocs de fibres 21 et 23, l'espace libre entre ces blocs peut être rempli d'un liquide d'indice adapté (par exemple Baume du Canada).

La figure 8 illustre encore un autre mode de réalisation permettant d'éviter une abrasion du masque 22. Ce dernier est réalisé à partir d'un film couleur positif transparent sur lequel ont été impressionnées les lignes rouge, verte et bleue. Le masque 22 est placé côté émulsion sur la fenêtre 21 de fibres optiques, celles-ci ayant une face extérieure plane. L' image du masque est reprise par une optique 24 pour être formée sur le film 30 à impressionner situé à distance du tube 10. En agissant sur le grandissement de l'optique de reprise, il est alors possible d'agrandir l'image formée sur le film.

Les figures 9 et 10 illustrent deux modes de réalisation d'un appareil d'analyse d'image en couleurs constituant un autre aspect de l'invention.

Sur la figure 9, on retrouve le même tube 10 que celui des figures 1 et 2, avec un écran 20 muni d'une fenêtre 21 en fibres optiques dont la face avant porte un masque 22, l'écran ayant un spectre d'émission large ou, au moins des pics d'émission dans les couleurs du masque. Toutefois, à la différence du tube de l'appareil de restitution, celui du tube de l'appareil d'analyse reçoit un signal vidéo constant pour constituer, avec les lignes R, V, B du masque, trois sources de lumière rouge, verte et bleue. L'image à analyser est portée par un film transparent 40, qui est déplacé en étant plaqué contre le masque 22 pour effectuer le balayage trame (la face avant de la fenêtre 21 de fibres optiques et du masque 22 est bombée pour faciliter le plaquage du film 40). La lumière traversant le film 40 est reprise par une nappe 41 de fibres optiques pour être renvoyée sur un détecteur unique 42 constitué par un dispositif opto-électronique, tel qu'un tube photo-multiplicateur qui délivre un signal électrique analogique. Ce signal est converti sous forme numérique au moyen d'un convertisseur analogique-numérique 43. On notera que la nappe 41 de fibres optiques est disposée de manière à pouvoir recueillir la lumière produite au cours du balayage de chacune des lignes de couleurs du masque 22.

Le fonctionnement en mode analyse est analogue à celui en mode restitution.

Le film 40 étant immobile, les lignes R, V, B du masque sont balayées successivement. Les blocs de données constitués par les signaux numériques obtenus correspondant aux différentes composantes de couleurs sont enregistrés dans des registres tampons dont l'organisation est inverse de celle illustrée par la figure 4. Après une séquence de balayage des trois lignes du masque, le film 40 est déplacé sur une distance égale au pas entre ces lignes et une nouvelle séquence de balayage est réalisée. Les données introduites dans les registres tampons sont lues de manière à être stockées, par exemple sur bande magnétique, avec le format corespondant au multiplexage par ligne des données rouge, verte et bleue.

Comme cela a été indiqué pour l'appareil de restitution, un fonctionnement de l'appareil d'analyse avec défilement continu du support d' image est possible en prévoyant un balayage ligne avec une direction présentant l'inclinaison appropriée.

La figure 9 illustre un appareil d'analyse en transmission d'une image portée par un support transparent. Dans le cas d'une image portée par un support opaque, on pourra utiliser l'appareil d'analyse en réflexion illustré par la figure 10.

L'appareil de la figure 10 se distingue de celui de la figure 9 en ce que le support d'image 50 portant l'image à analyser est maintenu espacé de la face avant plane du masque 22. De la sorte, l'extrémité de la nappe 41 de fibres optiques peut être amenée dans l'intervalle entre le masque 22 et le support d'image 50 afin de recueillir une partie de la lumière réfléchie par celui-ci au cours du balayage de chaque ligne du masque. Pour le reste, le fonctionnement de l'appareil de la figure 8 est analogue à celui de l'appareil de la figure 9.

On notera que l'utilisation du masque 22 pour l'analyse en couleurs permet d'éviter le recours à trois systèmes de détection, un pour chaque couleur, avec des moyens de séparation de couleurs appropriés, comme c'est le cas lorsque l'analyse en couleurs est effectuée en utilisant une source de lumière blanche.

En outre, l'utilisation de la nappe 41 de fibres optiques pour recueillir la lumière ayant traversé le support de l'image à analyser ou étant réfléchie par ce support est préférable à une optique de reprise en raison de son meilleur rendement optique.

Dans ce qui précède, on a envisagé l'utilisation d'un masque formé sur un film positif couleurs avec des lignes rouge, verte et bleue. Bien entendu, il est possible de réaliser le masque sur un film négatif couleur avec des lignes ayant comme couleurs le jaune, le magenta et le cyan.

## Revendications

1. Dispositif pour la restitution et/ou l'analyse d'image en couleurs sur un support d'image, comportant : un tube cathodique (10) à écran ligne (20), un ensemble de fibres optiques (21) fixé sur la face avant de l'écran du tube, un masque de couleurs (22) situé devant l'ensemble de fibres optiques et comportant au moins trois lignes (R, Y, B) de couleurs différentes, des moyens de balayage de l'écran par le faisceau électronique du tube suivant différentes lignes correspondant aux lignes du masque de couleurs, et des moyens (31-34) de déplacement relatif entre le tube et un support d'image (30 ; 40 ; 50) situé à l'avant du masque, de manière à parcourir chaque ligne de l'image sur le support par chacun des faisceaux produits par les balayages de l'écran suivant les différentes lignes du masque de couleurs, dispositif caractérisé en ce que le masque de couleurs (22) est constitué par un film couleur fixé devant l'ensemble de fibres optiques et sur lequel ont été formées les lignes (R, V, B) de couleurs différentes.

2. Dispositif pour la restitution d'une image en couleurs sur un support d'image, comportant un tube cathodique (10) à écran ligne (20), un ensemble de fibres optiques (21) fixé sur la face avant de l'écran du tube, un masque de couleurs (22) situé devant l'ensemble de fibres optiques et comportant au moins trois lignes (R, V, B) de couleurs différentes, des moyens de balayage de l'écran par le faisceau électronique du tube suivant différentes lignes correspondant aux lignes du masque de couleurs, des moyens de modulation du faisceau électronique du tube en fonction d'un signal d'image qui correspond à l'image à restituer et qui est élaboré à partir de données représentant chacune une composante de couleur d'une ligne d'image, et des moyens (31-34) de déplacement relatif entre le tube et un support d'image (30) situé à l'avant du masque de manière à former sur le support chaque ligne de l'image à restituer par superposition de ses composantes de couleurs formées chacune lors du passage du support d'image devant la ligne de couleur correspondante balayée par le faisceau électronique, dispositif caractérisé en ce que :

   - le masque de couleurs (22) est constitué par un film couleur fixé devant l'ensemble de fibres optiques et sur lequel ont été formées les lignes (R, V, B) de couleurs différentes, et
   - des registres tampons (R4, R3, R2, R1, V3, V2, V1, B2, B1) sont prévus pour recevoir lesdites données représentant les composantes de couleurs des lignes d'image et sont agencés de manière à permettre la lecture séquentielle desdites données dans l'ordre dans lequel les composantes de couleurs des lignes de l'image sont formées sur le support d'image.

3. Dispositif selon la revendication 2, caractérisé en ce que lequel le support d'image (30) et le masque de couleurs (22) sont déplacés l'un par rapport a l'autre pas à pas dans une direction perpendiculaire à celle des lignes du masque.

4. Dispositif selon la revendication 2, caractérisé en ce que le support d'image (30) et le masque de couleurs (22) sont déplacés l'un par rapport à l'autre de façon continue, et les lignes de couleurs du masque sont inclinées par rapport à la perpendiculaire à la direction du déplacement relatif entre le masque et le support d'image.

5. Dispositif d'analyse d'une image en couleurs portée par un support d'image, comportant un tube cathodique (10) à écran ligne (20), un ensemble de fibres optiques (21) fixé sur la face avant du tube, des moyens de balayage de l'écran par le faisceau électronique du tube suivant différentes lignes de couleurs, et des moyens de déplacement relatif entre le tube et le support d'image (40 ; 50) situé devant le tube de manière à balayer chaque ligne de l'image portée par le support d'image successivement par chacun des faisceaux produits par les balayages de l'écran suivant les différents lignes de couleurs, caractérisé en ce que :

   - un masque de couleurs (22) en forme de film est fixé devant l'ensemble de fibres optiques (21) et porte au moins trois lignes de couleurs différentes (R, V, B),
   - des moyens de balayage de l'écran sont agencés pour réaliser un balayage suivant différentes lignes correspondant aux lignes du masque de couleurs (22)

- des moyens (41) de transmission de lumière a fibres optiques sont disposés avec une première extrémité située au voisinage du support d'image (30 ; 40) pour recueillir les signaux lumineux représentatifs des composantes de couleurs des différentes lignes de l'image, et
- des moyens de détection (42) sont disposés au voisinage d'une autre extrémité desdits moyens de transmission de lumière pour convertir lesdits signaux lumineux en données numériques.

6. Dispositif selon la revendication 5, caractérisé en ce que le support d'image (40) est transparent et est situé entre le masque de couleurs (22) et lesdits moyens (41) de transmission de lumière recueillant la lumière ayant traversé le support d'image.

7. Dispositif selon la revendication 5, caractérisé en ce que le support d'image (50) est opaque et lesdits moyens (41) de transmission de lumière ont leur première extrémité située dans un intervalle entre le masque de couleurs (22) et le support d'image (50) pour recueillir la lumière réfléchie par le support d'image.

8. Dispositif selon l'une quelconque des revendications 1 à 7, caractérisé en ce que le masque de couleurs (22) est muni d'un revêtement protecteur transparent sur sa face extérieure contre laquelle est déplacé le support d'image relativement au masque.

9. Dispositif selon l'une quelconque des revendications 1 à 8, caractérisé en ce qu'un deuxième ensemble de fibres optiques (23) est fixé devant le masque de couleurs (22), le support d'image étant déplacé par rapport au masque devant le deuxième ensemble de fibres optiques.

10. Dispositif selon l'une quelconque des revendications 1 à 9, caractérisé en ce qu'un système optique (24) est disposé entre le masque de couleurs (22) et le support d'image.

11. Dispositif selon l'une quelconque des revendications 1 à 10, caractérisé en ce que chaque ligne (R, V, B) du masque de couleurs (22) est formée de segments élémentaires séparés les uns des autres par des segments opaques et est séparée de la ou chaque ligne voisine par une ligne opaque.

Claims

1. Device for the restitution and/or analysis of color images on an image carrier, comprising: a cathode ray tube (10) with a line screen (20), an assembly of optical fibers (21) fixed on the front face of the tube screen, a color mask (22) situated in front of the optical fiber assembly and comprising at least three lines (R,V,B) of different colors, means of scanning the screen by the electron beam of the tube along different lines corresponding to the lines of the color mask; and means (31-34) of relative displacement between the tube and an image carrier (30;40;50) situated in front of the mask, so that each line of the image on the carrier is scanned by each of the beams produced by the scannings of the screen along the different lines of the color mask, device characterized in that the color mask (22) is constituted by a color film fixed in front of the optical fiber assembly and on which the lines (R,V,B) of different colors have been formed.

2. Device for the restitution of a color image on an image carrier, comprising a cathode ray tube (10) with a line screen (20), an assembly of optical fibers (21) fixed on the front face of the tube screen, a color mask (22) in film form, fixed in front of the optical fiber assembly and comprising at least three lines (R,V,B) of different colors, means of scanning the screen by the electron beam of the tube along different lines corresponding to the lines of the color mask; means of modulating the electron beam of the tube as a function of an image signal which corresponds to the image to be restituted and is worked out from data representing each one a color component of the color of a line of image, and means (31-34) of relative displacement between the tube and an image carrier (30) situated in front of the mask so as to form on said carrier each line of the image to be restituted by superimposition of its color components each one being formed when the image carrier passes in front of the corresponding line of color scanned by the electron beam, device characterized in that:
- the color mask (22) is constituted by a color film fixed in front of the optical fiber assembly and on which the lines (R,V,B) of different colors, are formed, and
- buffer registers (R4, R3, R2, R1, V3, V2, V1) are provided for receiving said data representing the color components of the lines of image and are so arranged as to enable sequential reading of the data in the order in which the color components of the lines of the image are formed on the image carrier.

3. Device according to claim 2, characterized in that the image carrier (30) and the color mask (22) are moved one with respect to the other stepwise, in a direction perpendicular to the direction of the lines of the mask.

4. Device according to claim 2, characterized in that the image carrier (30) and the color mask (22) are moved one with respect to the other in continuous manner, and the lines of colors of the mask are inclined with respect to the perpendicular to the direction of relative displacement between the mask and the image carrier.

5. Device for analyzing a color image carried by an image carrier, comprising a cathode ray tube (10) with a line screen (20), an assembly of optical fibers (21) fixed on the front face of the tube screen, means of scanning the screen by the electron beam of the tube along different lines of colors, and means of relative displacement between the tube and the image carrier (40;50) situated in front of the tube, so that each line of the image carried by the image carrier is scanned successively by each of the beams produced by the scannings of the screen along the different lines of colors, characterized in that:
   - a color mask (22) in film form is fixed in front of the optical fiber assembly (21) and carries at least three lines of different colors (R,V,B),
   - screen scanning means are arranged for scanning along different lines corresponding to the lines of the color mask (22),
   - optical fiber means (41) for transmitting light, are disposed with a first end situated close to the image carrier (30;40) to pick up the light signals representing color components of the different lines Of the image and
   - detection means (42) are situated close to another end of said light transmission means for converting said light signals to digital data.

6. Device according to claim 5, characterized in that the image carrier (40) is transparent and is situated between the color mask (22) and said light transmission means (41) picking up the light which has gone through the image carrier.

7. Device according to claim 5, characterized in that the image carrier (50) is opaque and said light transmission means (41) have their first end situated in an interval provided between the color mask (22) and the image carrier (50) to pick up the light reflected by the image carrier.

8. Device according to any one of claims 1 to 7, characterized in that the mask of colors (22) is provided with a transparent protective coating on its external face against which the image carrier is moved relatively to the mask.

9. Device according to any one of claims 1 to 8, characterized in that a second assembly of optical fibers (23) is fixed before the color mask (22), the image carrier being moved with respect to the mask in front of the second assembly of optical fibers.

10. Device according to any one of claims 1 to 9, characterized in that an optical system (24) is provided between the color mask (22) and the image carrier.

11. Device according to any one of claims 1 to 20, characterized in that each line (R,V,B) of the color mask (22) is formed of elementary segments separated one from the other by opaque segments, and is separated from the or each adjacent lines by an opaque line.

**Ansprüche**

1. Vorrichtung für die Wiedergabe und/oder die Analyse von farbigen Bildern auf einem Bildträger, mit: einer Kathodenstrahlröhre (10) für einen Zeilenbildschirm (20), einer Anordnung von optischen Fasern (21), die auf der Vorderseite des Röhrenbildschirms befestigt ist, einer Farbenmaske (22), die vor der Anordnung der optischen Fasern angeordnet ist und wenigstens drei Zeilen (R, V, B) von unterschiedlichen Farben aufweist, Einrichtungen zum Abtasten des Bildschirms mittels des elektronischen Bündels der Röhre gemäß unterschiedlicher Zeilen entsprechend den Zeilen der Farbenmaske, und mit Einrichtungen (31-34) zur Relativbewegung zwischen der Röhre und einem Bildträger (30; 40; 50), der vor der Maske sitzt, derart, um jede Bildzeile auf dem Träger durch jedes Bündel zu durchlaufen, das durch die Abtastungen des Bildschirms gemäß den unterschiedlichen Zeilen der Farbenmaske erzeugt wird,

wobei die Vorrichtung **dadurch gekennzeichnet** ist, daß die Farbenmaske (22) durch einen Farbfilm gebildet wird, der vor der Anordnung der optischen Fasern befestigt ist, und auf dem die Zeilen (R, V, B) von unterschiedlichen Farben ausgebildet wurden.

2. Vorrichtung für die Wiedergabe eines Farbbildes auf einen Bildträger, mit einer Kathodenstrahlröhre (10) für einen Zeilenbildschirm (20), einer Anordnung von optischen Fasern (21), die auf der Vorderseite des Bildschirms der Röhre festgelegt ist, einer Farbenmaske (22), die vor der Anordnung der optischen Fasern angeordnet ist und wenigstens drei Zeilen (R, V, B) unterschiedlicher Farben aufweist, mit Einrichtungen zum Löschen des Bildschirms durch das elektronische Bündel der Röhre gemäß unterschiedlicher Zeilen, entsprechend den Zeilen der Farbenmaske, Modulationseinrichtungen des elektronischen Bündels der Röhre in Abhängigkeit eines Bildsignals, das dem wiederzugebenden Bild entspricht und das ausgehend von Daten erzeugt wird, die jeweils einen Farbbestandteil einer Bildzeile darstellen, und mit Einrichtungen (31-34) zum relativen Bewegen zwischen der Röhre und einem Bildträger (30), der vor der Maske derart angeordnet ist, daß er auf dem Träger jede zu wiedergebende Bildzeile mittels Überlagerung seiner Farbbildbestandteile bildet, die jeweils bei dem Vorbeigehen des Bildträgers vor der entsprechenden Farbzeile gebildet wird, die von dem elektronischen Bündel abgetastet wird,

**dadurch gekennzeichnet, daß:**

- die Farbenmaske (22) durch einen Farbfilm gebildet wird, der vor der optischen Faseranordnung befestigt ist, und auf dem die Zeilen (R, V, B) von unterschiedlichen Farben gebildet wurden, und

- Zwischenspeicher (R4, R3, R2, R1, V3, V2, V1, B2, B1) vorgesehen sind, um die Daten aufzunehmen, die die Farbbestandteile der Bildzeilen darstellen, und derart angeordnet werden, daß sie das sequentielle Lesen der genannten Daten in der Ordnung erlauben, in der die Farbbestandteile der Bildzeilen auf dem Bildträger gebildet werden.

3. Vorrichtung nach Anspruch 2,
**dadurch gekennzeichnet,** daß der Bildträger (30) und die Farbenmaske (22) in Bezug zueinander Schritt für Schritt bewegt werden in eine Richtung, senkrecht zu jener der Maskenzeilen.

4. Vorrichtung nach Anspruch 2,
**dadurch gekennzeichnet,** daß der Bildträger (30) und die Farbenmaske (22) bezüglich zueinander auf kontinuierliche Weise bewegt werden, und die Farbzeilen der Maske bezüglich der Senkrechten zur Richtung der relativen Bewegung zwischen der Maske und dem Bildträger geneigt sind.

5. Vorrichtung zum Lesen eines Farbbildes, getragen von einem Bildträger, mit einer Kathodenstrahlröhre (10) für einen Zeilenbildschirm (20), einer Anordnung von optischen Fasern (21), die auf der Vorderseite der Röhre befestigt sind, Einrichtungen zum Abtasten des Bildschirms durch ein elektronisches Bündel der Röhre gemäß unterschiedlicher Farbzeilen, und mit Einrichtungen zum relativen Bewegen zwischen der Röhre und dem Bildträger (40; 50), der vor der Röhre derart angeordnet ist, daß jede Bildzeile, die von dem Bildträger getragen wird nacheinander durch ein jedes der Bündel abgetastet wird, die durch die Abtastungen des Bildschirms gemäß den unterschiedlichen Farbzeilen erzeugt werden,

**dadurch gekennzeichnet, daß:**

- eine Farbenmaske (22) in Form eines Films vor der Anordnung von optischen Fasern (21) befestigt ist und wenigstens drei Zeilen unterschiedlicher Farben (R, V, B) trägt,

- Abtasteinrichtungen des Bildschirms angeordnet werden, um eine Abtastung gemäß unterschiedlicher Zeilen zu erzeugen, entsprechend den Zeilen der Farbenmaske (22),

- Einrichtungen (41) der Lichtübertragung mit optischen Fasern angeordnet sind, mit einem ersten Ende, das in der Nähe des Bildträgers (30; 40) angeordnet ist, um die Lichtsignale aufzunehmen, die den Farbbestandteilen der unterschiedlichen Bildzeilen entsprechen, und

- Abtasteinrichtungen (42) in der Nähe eines anderen Endes der Übertragungseinrichtungen von Licht angeordnet sind, um die genannten Lichtsignale in numerische Daten umzuwandeln.

6. Vorrichtung nach Anspruch 5,
**dadurch gekennzeichnet,** daß der Bildträger (40) durchsichtig ist, und zwischen der Farbenmaske (22) und den Einrichtungen (41) der Übertragung von Licht angeordnet ist, die das Licht sammeln, das den Bildträger durchquert hat.

7. Vorrichtung nach Anspruch 5,
**dadurch gekennzeichnet,** daß der Lichtträger (50) opak ist, und die Einrichtungen (41) zum Übertragen von Licht ihr erstes Ende in einem Intervall angeordnet haben zwischen der Farbenmaske (22) und dem Bildträger (50), um das von dem Bildträger zurückgeworfene Licht aufzunehmen.

8. Vorrichtung nach einem der Ansprüche 1 bis 7, **dadurch gekennzeichnet,** daß die Farbenmaske (22) mit einem durchsichtigen Schutzüberzug an ihrer Außenseite versehen ist, gegen die der Bildträger bezüglich der Maske bewegt wird.

9. Vorrichtung nach einem der Ansprüche 1 bis 8, **dadurch gekennzeichnet,** daß eine zweite optische Faseranordnung (23) vor der Farbenmaske (22) festgelegt ist, wobei der Bildträger bezüglich der Maske vor der zweiten Anordnung von optischen Fasern bewegt wird.

10. Vorrichtung nach einem der Ansprüche 1 bis 9, **dadurch gekennzeichnet,** daß ein optisches System (24) zwischen der Farbenmaske (22) und dem Bildträger angeordnet ist.

11. Vorrichtung nach einem der Ansprüche 1 bis 10, **dadurch gekennzeichnet,** daß jede Zeile (R, V, B) der Farbenmaske (22) aus Elementarsegmenten gebildet ist, die voneinander durch opake oder lichtundurchlässige Segmente getrennt sind, und von der oder jeder benachbarten Zeile durch eine lichtundurchlässige Zeile getrennt ist.

Fig.1

32  31

10

21
22
20

30
34  33

Fig.2

16

10

11  12  14  15

13

21

20

22

19  MODULATEUR

17

18  REGISTRES
TAMPONS

DONNÉES  CALCULATEUR
HÔTE

Fig.3

22  V

R

10

B  21

Fig. 4

Fig. 5

Fig. 6

10

22  30

20

21  23

Fig-7

10

20

24  30

22

21

Fig.8

10

40

41  42  43

20

22

21

Fig.9

10

21  22  50

20

43  42

41

Fig.10